# EUROPEAN PATENT APPLICATION

(11) **EP 1 145 824 A2**
(43) Date of publication of application: **17.10.2001**
(21) Application number: 01830076.4
(22) Date of filing: 07.02.2001
(51) Int. Cl.: B29C 63/00, B32B 5/26

(54) **Method for reinforcing manufactured articles made of plastic, stone-like or metallic material**

(30) Priority: 13.04.2000 IT MI200829
(71) Applicant: LONZA S.P.A., 20124 Milano (IT); Pistoni, Gianfranco, 0034 Colle Ferro (Prov. of Roma) (IT)
(72) Inventor: Leonardi, Maurizio, 52028 Terranova Bracciolini (IT); Pistoni, Gianfranco, 00034 Colle Ferro (IT); Giffoni, Massimo, Livorno (IT); Ensoli, Fosco, 52025 Montevarchi (IT)
(74) Representative: Modiano, Guido, Dr.-Ing.

(57) **Abstract**

A method for reinforcing manufactured articles made of thermoplastic, stone-like or metallic material, comprising:
the application, on a manufactured item, of a film of composite molding material which comprises a reinforcing fiber chosen among glass fiber, carbon fiber, Kevlar and a thermosetting resin chosen from the group that consists of unsaturated polyester resin, vinyl ester resin, epoxy resin, cyanate resin, and mixtures thereof; and
the polymerization of the composite molding material so as to make the film adhere firmly to the manufactured item and provide a reinforced structure.

## Description

The present invention relates to a method for reinforcing manufactured articles.

In particular, the present invention relates to a method for reinforcing plastic, stone-like or metallic materials by applying a film of reinforcing material which is suitable for molding.

Most manufactured articles made of thermoplastic materials are currently manufactured by hot-forming thermoplastic resins and are reinforced by applying reinforcements made of fiberglass-reinforced plastics.

For example, the formation of the basic structure of bathtubs provides for an initial step of molding sheets or laminas of acrylic resin at a temperature in the range between 90 and 110 °C.

The preformed bathtub is then extracted from the mold, cooled under pressure and stored.

The preformed bathtub is then taken to a work area which is provided with suction hoods, where it is subjected to combined cutting and spraying.

This process uses machines which cut the glass filaments and at the same time deposit a catalyzed polyester resin on the outer surface of the preformed bathtub.

The layer of fiberglass-reinforced plastics is then rolled with metallic or lamb-hair rollers in order to achieve good compaction of the materials.

The layer of fiberglass-reinforced plastics is then made to polymerize in a tunnel at a temperature of 40-45 °C or at room temperature.

At the end of the process, the manufactured article is subjected to trimming and finishing before being stored.

Conventional preimpregnated components are currently manufactured by using a three-step process.

The first manufacturing step provides for the preparation of an impregnation paste by mixing and weighing the following components:
-- an unsaturated polyester resin, a vinyl ester resin or an acrylic resin of the styrened type, or;
-- an epoxy or phenolic resin;
-- a thermoplastic resin for controlling volume shrinkage or mechanical characteristics;
-- an inorganic filler for flow;
-- a catalyst for heat-induced polymerization and optionally a release agent, one or more pigments, chemical thickening agents, and a stabilizing agent.

The second step of preparation provides for the impregnation of a structural material with the paste of the initial step. In the impregnation step, the paste and the structural material are placed between two polyethylene sheets and are then passed between two rollers which facilitate the impregnation of the paste in the fiber.

The third step provides for the packaging and curing of the pre-impregnated material in rolls which are covered with a cellophane film. The rolls are stored in chambers at a constant temperature in order to assist their curing and preservation.

It has now been observed that the methods of the prior art for providing manufactured articles reinforced with fiber and resin entail manufacturing drawbacks which are mainly linked to the cutting/spraying, manual lamination and polymerization process, during which vapors of organic substances which are particularly polluting for the environment and harmful to the health are released.

Another drawback noted in the thermoplastic material reinforcement methods of the prior art resides in the high production costs, which are mainly due to the installation and operation of the apparatus for ventilation and organic vapor disposal.

The aim of the present invention is to eliminate or substantially reduce the drawbacks noted in the prior art.

Another object of the present invention is to provide a molding material in sheet form which, when applied to substrates and manufactured articles made of plastic, stone-like or metallic material, increases their mechanical strength and wear-resistance characteristics.

Another object of the present invention is to provide a method for reinforcing manufactured articles made of plastic, stone-like or metallic material whose implementation entails a reduced environmental impact and is simple and practical to provide.

In view of this aim and these and other objects which will become better apparent hereinafter, according to a first aspect of the present invention, a method is provided for reinforcing manufactured articles made of a material chosen among thermoplastic, stone-like or metallic materials, comprising the steps of:
applying a film of composite molding material on a manufactured article made of thermoplastic, stone-like or metallic material;
polymerizing said composite molding material so as to make said film adhere firmly to the manufactured article and provide a reinforced structure;
said method being characterized in that said composite molding material comprises a reinforcing fiber chosen among glass fiber, carbon fiber, Kevlar and a thermosetting resin chosen from the group that consists of unsaturated polyester resin, vinyl ester resin, epoxy resin, cyanate resin, and mixtures thereof.

Conveniently, the composite molding material according to the invention is provided in the form of a sheet or lamina which is enclosed between two polyethylene films which are removed at the time of use. During the storage period, said sheet or lamina is rolled up in rolls or stacked in layers.

The method according to the present invention has been found to be particularly suitable for reinforcing manufactured articles made of thermoplastic material, preferably of the acrylic or methacrylic type, with particular reference to polymethyl methacrylate.

The method according to the invention is thus applied industrially in various fields of technology, for example in the nautical sector, in the coating and reinforcement of structures of resin watercraft, in the field of sanitary articles, in the manufacturing sector for reinforcing substrates of thermoplastic materials of the acrylic/methacrylic type.

In the nautical sector, the method according to the invention replaces the known methods of hand lay-up and spray-up for providing the reinforcing body (stratification of the first and second layers), with great advantages from the point of view of environmental impact, simplification and reduction of the production cycle time.

The reinforcing body can be composed of various layers of mat, veil or bonded combinations thereof, with thicknesses which preferably vary from 5 to 30 mm, and can be applied in one or more sheets of composite.

The method according to the invention, with UV polymerization, allows to use high thicknesses thanks to the low heat generated by the cross-linking reaction, drastically reducing shrinkage problems and crack formation.

In the field of laminates and sandwich panels, the large surfaces to be treated with liquid resin (1 to 200 square meters) lead to a high environmental impact in the workplace. The use of the composite material according to the invention drastically reduces this problem. Moreover, thanks to the more uniform distribution of resin, the aesthetic appearance of the final manufactured article is improved.

In general, the manufacture of self-extinguishing manufactured articles for the transportation sector (buses, trains, vans) requires the use of specific resins in combination with large amounts of mineral fillers in order to achieve the levels of fire-resistance required by the applicable statutory provisions.

Manual impregnation of the fiber with resin/mineral filler mixtures is a difficult operation which requires a long time and does not allow to manufacture large surfaces.

The method according to the invention, especially if in combination with the UV polymerization technology, allows to bypass these difficulties, extending the fields of utilization, allowing faster production cycles and reducing the environmental impact in the workplace.

According to a preferred embodiment, the present invention relates to a method for reinforcing manufactured articles, comprising:
-- a preliminary step for preparing or forming a substrate made of thermoplastic material;
-- optionally, the placement of the preformed substrate on a male mold part after overturning;
-- the application of a sheet of composite molding material on the outer surface of the substrate, in order to provide a two-layered structure, in which said molding material is a composite of the above-described type;
-- the polymerization of said molding material, in order to provide a substantially monolithic structure as a consequence of the bonding of the layer of composite on the outer surface of the substrate;
-- the extraction of the reinforced material from the mold.

Within the scope of the invention, the unsaturated polyester and vinyl ester resins used are advantageously diluted in reactive monomers, which are required for polymerization and are chosen among vinyl aromatic monomers and acrylic or methacrylic monomers.

The expression "vinyl aromatic monomers" comprises vinyl benzene (styrene) monomers, divinyl benzene monomers, α-methyl vinyl benzene monomers, vinyl toluene monomers, and mixtures thereof.

Preferred acrylic or methacrylic monomers are defined hereinafter as M1, M2, M3, wherein:
**M1** is RCH=CR'-CO-OR"
   where R = H, CH₃, C₂H₅, C₃H₇, C₄H₉
   R' = H, CH₃
   R" = CH₃, C₂H₄OH, C₃H₆OH, (C₃H₆O)ₙ H
   where n = 1, 2, 3, 4, 5, 6, 7, 8
   or
**M2** is (RCH=CR'-CO-O)₂R"
   where R = H, CH₃, C₂H₅, C₃H₇, C₄H₉
   R' = H, CH₃
   R" = CₙH₂ₙ
   where n = 1, 2, 3, 4, 5, 6, 7, 8
   or
**M3** is (CH₂=CR-CO-OCH₂)₃CC₂H₅
   where R = H, CH₃

Polymerization of the molding material can be achieved by exposure to a heat source or by exposure to a UV source.

In heat-induced polymerization, the molding material is first compacted by closing the mold with the corresponding complementary mold, preferably forming a vacuum between the two molds or applying pressure to the complementary mold, or simply by means of a mechanical rolling action.

The molds that enclose the preformed item are then sent to the oven to be heated to a temperature which is conveniently set in the interval of approximately 50 to 100 °C, preferably between 65 and 80 °C.

Once polymerization has occurred, the manufactured article is extracted from the mold and optionally subjected to trimming and finishing.

In ultraviolet-ray polymerization, the manufactured article contains a cross-linking agent which is sensitive to UV radiation (photoinitiator).

The method according to the present embodiment of the invention allows to reduce considerably the environmental drawbacks observed in the prior art.

The execution of the process according to the invention in fact does not generate organic vapors, since application of the fiberglass-reinforced plastics by means of the combined cutting and spraying method is avoided and therefore it is no longer necessary to install expensive organic vapor elimination systems, with a consequent considerable saving in terms of cost.

Moreover, it has been observed that the manufactured article provided by means of the process according to the invention has a high resistance to mechanical stresses and thermal stresses together with a particularly pleasant outward appearance.

According to another aspect of the present invention, a composite molding material is provided which comprises:
a reinforcing fiber chosen among glass fiber, carbon fiber and Kevlar; and
a thermosetting resin chosen from the group that consists of unsaturated polyester resin, vinyl ester (or epoxy acrylic) resin, epoxy resin, cyanate resin, and mixtures thereof.

The type of reinforcing fiber is chosen according to the type of application and impact resistance that the treated manufactured article is to have.

The usable unsaturated polyester and vinyl ester resins are advantageously diluted in reactive monomers which are necessary for polymerization and are chosen among vinyl aromatic monomers and acrylic or methacrylic monomers.

The expression "vinyl aromatic monomers" comprises vinyl benzene (styrene) monomers, divinyl benzene monomers, α-methyl vinyl benzene monomers, vinyl toluene monomers, and mixtures thereof.

Advantageously, said acrylic or methacrylic monomers have the formula M1, M2, M3, wherein:
**M1** is RCH=CR'-CO-OR"
   where R = H, CH₃, C₂H₅, C₃H₇, C₄H₉
   R' = H, CH₃
   R" = CH₃, C₂H₄OH, C₃H₆OH, (C₃H₆O)ₙ H
   and n = 1,2,3,4,5,6,7,8;
**M2** is (RCH=CR'-CO-O)₂R"
   where R = H, CH₃, C₂H₅, C₃H₇, C₄H₉
   R' = H, CH₃
   R" = CₙH₂ₙ
   and n = 1,2,3,4,5,6,7,8;
**M3** is (CH₂=CR-CO-OCH₂)₃CC₂H₅
   where R = H, CH₃.

A type of preferred polyester or vinyl ester resin is diluted in an amount of monomer of 20 to 55% by weight, more preferably 25 to 45% by weight.

According to a preferred formula, the molding material is a composite which comprises 30 to 70% by weight of said resin, 25 to 60% by weight of said reinforcing fiber, 1 to 15% by weight of a mineral filler, and 1 to 3% by weight of a catalyst, advantageously constituted by a peroxide or a photoinitiator.

The composite molding material according to the invention, also termed pre-impregnated material, can be produced by using a three-step process.

The first production step entails preparing an impregnation paste by mixing and weighing the following components:
-- at least one resin chosen among unsaturated polyester resin, vinyl ester resin, acrylic resin, epoxy resin, phenolic resin, cyanate resin; optionally with one or more of the following components:
-- a thermoplastic resin for controlling volume shrinkage or mechanical characteristics;
an inorganic filler for flow;
-- a catalyst for heat-induced polymerization or UV polymerization,
-- a release agent, one or more pigments, chemical thickening agents and a stabilizing agent.

The second preparation step provides for the impregnation of a reinforcing fiber, chosen among glass fiber, carbon fiber and Kevlar, with the paste produced in the preceding step.

In the impregnation step, the paste and the reinforcing fiber are arranged between two polyethylene sheets and are then passed between two rollers which facilitate the amalgamation of the impregnation paste in said fiber.

The third step provides for the packaging and curing of the pre-impregnated material in rolls covered with a cellophane film. The rolls are stored in chambers at constant temperature in order to facilitate curing and preservation thereof.

Further characteristics and advantages of the present invention will become better apparent from the description of a preferred but not exclusive embodiment thereof, illustrated only by way of non-limitative example in the accompanying drawings, wherein:
Figures 1A and 2A are schematic sectional views of a mold for bathtubs, on whose top end a sheet of molding material adapted to form bathtubs is arranged;
Figures 1B and 2B are schematic sectional views of a mold for bathtubs, on which a preformed bathtub is arranged;
Figures 1C and 2C are schematic sectional views of a complementary mold on which a preformed bathtub is arranged;
Figures 1D and 2D are schematic sectional views of a complementary mold on which there is a preformed bathtub on which a reinforcing lamina made of a molding material according to the invention has been applied;
Figure 1E is a schematic sectional view of a mold coupled to the corresponding complementary mold with an interposed preformed bathtub reinforced with a lamina of molding material;
Figure 2E is a schematic sectional view of a complementary mold on which there is a preformed bathtub reinforced by a lamina of molding material, on which a cross-linking agent is applied by means of a roller;
Figure 1F is a sectional view of a particular preformed bathtub according to the invention, constituted by a lamina of thermoplastic material on which a sheet of preimpregnated composite material according to the invention is coupled.

A method for reinforcing preformed bathtubs, in which the reinforcing material is rendered monolithic with the preformed structure by heat-induced polymerization or by polymerization with UV rays, is described with reference to Figures 1A-1F.

In a preliminary step, a bathtub made of acrylic thermoplastic material, preferably polymethyl methacrylate, is formed. Figure 1A illustrates the preliminary step of the process, in which a sheet 3 of acrylic thermoplastic material is arranged on a mold 1 for bathtubs. Then, as shown in Figure 1B, vacuum is produced inside the mold so that the sheet, by adhering to the mold 1, assumes its shape.

As shown in Figure 1C, the preformed bathtub 3 is then overturned onto a complementary mold 2 in order to allow to apply a sheet 4 of a molding material, as shown in Figure 1D.

Conveniently, the sheet of molding material 4, before use, is in the form of a laminated panel sandwiched between two polyethylene films and rolled up in rolls or stacked on planes. Upon use, one of the two films is removed to allow the sheet to adhere to the preformed bathtub.

The molding material in sheet form that can be used is conveniently constituted by an unsaturated polyester or vinyl ester resin (30-70% by weight), a fibrous reinforcing agent (25-60% by weight), one or more mineral fillers (5-60% by weight), a thixotropic additive (2-7% by weight) and a peroxide or UV catalyst (1-3% by weight).

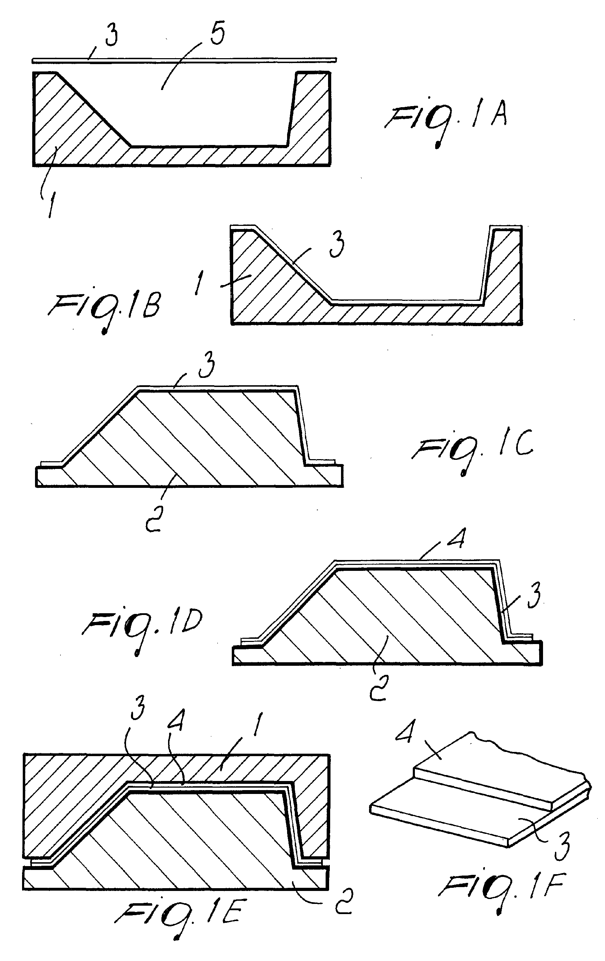

As shown in Figure 1E, the corresponding complementary mold 1 is applied over the mold, applying pressure in order to make the acrylic layer adhere strongly to the sheet of preimpregnated material. The mold is then sent to an oven and heated to a temperature between 50 and 100 °C, at which the molding material cross-links, firmly adhering to the preformed bathtub, thus giving it improved strength characteristics.

The operations for extracting the bathtub from the mold are performed after ambient temperature has been reestablished.

The bathtub produced by hot forming has a two-layered structure, as shown in Figure 1F, which is highly resistant to impacts and thermal shocks.

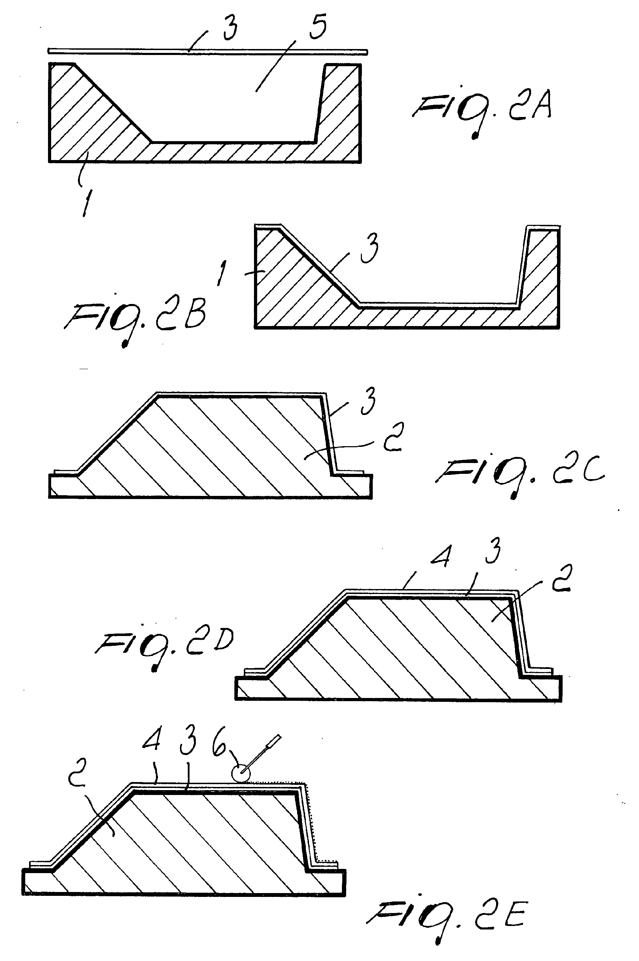

Another embodiment of the process for reinforcing bathtubs according to the invention, in which polymerization is obtained by exposure to a source of ultraviolet rays, is described with reference to Figures 2A-2E.

The steps of the process according to the present embodiment, schematically shown in Figures 2A-2D, coincide with the ones described for the preceding embodiment, shown in Figures 1A-1D. The two embodiments differ in the type of polymerization, which in this case occurs by exposure to ultraviolet rays.

Figure 2E illustrates the step that is preliminary to polymerization, in which the outer surface of the sheet of composite molding material is treated with a cross-linking agent which is sensitive to ultraviolet rays.

The mold 2 is then sent to the UV area, in which the molding material cross-links and forms a monolithic impact-resistant structure.

The following examples are provided by way of illustration of the present invention and must not be construed as limiting the scope of the invention, as instead defined by the accompanying claims.

### EXAMPLE 1

Preparation of a composite molding material, hereinafter termed pre-impregnated material, suitable for the nautical sector.

A peroxide catalyst is added to a thixotropic unsaturated vinyl ester or polyester resin, subjecting it to agitation in order to produce a resin-based mixture. The mixture thus produced is then poured into a tank, where it is impregnated with a glass reinforcing agent. The impregnated glass is then compacted in an impregnator of the automatic type, passing between two rollers which eliminate the excess resin from the glass. The prepared pre-impregnated material is then applied to the mold of the watercraft, performing compaction with a metal and lamb hair roller. The method is performed by using molds made of fiber-reinforced plastics, placed at ambient temperature (16-30 °C). The resins used have curing times of 20 to 90 minutes.

### EXAMPLE 2

### VARIOUS REINFORCED PLASTICS

Transformation technologies:
-- manual, combined cutting and spraying, RTM
-- at ambient temperature or with a hot press

### CONVENTIONAL METHOD

The surface of the mold is prepared and cleaned, then a release agent, such as polyethylene waxes or fluorinated paraffins diluted in organic solvents, is applied.

A finishing paint based on polyester resin, vinyl ester resin or epoxy resin and known as gelcoat, is then sprayed so as to obtain a constant thickness of no more than 0.4-0-7 mm and no less than 0.2 mm.

Once curing of the resin is achieved, production of the manufactured article begins by proceeding as follows:
1. a uniform layer of resin, catalyzed beforehand with a spray method, is applied;
2. 1 mat of glass fabric of low grammage (for example 125 g/m²) is deposited;
3. rolling is performed in order to impregnate the glass and the resin;
4. an additional layer of resin and glass is then applied after polymerization of the preceding layer;
5. the manufactured article is extracted when the polymerization reaction is completed (completion of the exothermic step).

### METHOD ACCORDING TO THE INVENTION

Since the surfaces can have an area of up to 30-40 m², steps 2, 3 and 4 are the ones that receive a benefit in terms of environmental impact with the method according to the invention.

The following sequence is used:
1. a finishing paint based on polyester, vinyl ester or epoxy resin, known as gelcoat, is applied by spraying;
2. once the gelcoat has set, a pre-impregnated material is applied;
3. the pre-impregnated material is compacted with the gelcoat by rolling the composite or by compaction with vacuum in order to optimize adhesion and eliminate air pockets;
4. an additional layer of pre-impregnated material is applied after polymerization of the preceding layer;
5. the manufactured article is then extracted when the polymerization reaction is complete (completion of the exothermic step).

### EXAMPLE 3

### Sandwich panels

### TRADITIONAL METHOD

The panel is composed of two outer skins made of resin, treated externally with a paint of the gelcoat type, and of a core of low-, medium- or high-density expanded polyurethane.

The technology used is similar to the one described in Example 2.
1. gelcoat is applied to the mold and to the complementary mold;
2. unsaturated polyester or vinyl ester resin, catalyzed with organic peroxides, is then applied first to the mold; glass fabric in the form of one or more mats of 125 to 450 g/m² is then deposited, facilitating its impregnation by rolling and repeating the operation until the intended thickness (1 to 5 mm) is reached;
3. a polyurethane panel with a thickness variable between 1 to 10 cm is then applied on the mold;
4. a layer of catalyzed resin is then applied onto the polyurethane, with subsequent manual impregnation of one or more glass mats, as described in step 2;
5. a complementary mold is then coupled;
6. polymerization is then performed at 60 °C;
7. the manufactured article is extracted after polymerization is complete.

### METHOD ACCORDING TO THE INVENTION

The following sequence is used:
1. a layer of gelcoat is applied;
2. once the gelcoat has cured, a composite molding material, constituted by pre-impregnated material in the form of a lamina with a thickness of 1 to 4 mm and a grammage of 500 to 3500 g/m², is applied;
3. the molding material is compacted with the gelcoat, in order to optimize adhesion and eliminate air pockets, by rolling said molding material;
4. one or more sheets of previously used molding material are applied after polymerization of the preceding layers;
5. a polyurethane panel is applied;
6. a sheet of pre-impregnated material with a thickness of 1 to 4 mm of composite material is applied on the polyurethane:
7. the molding material is compacted with the polyurethane, in order to optimize adhesion and eliminate air pockets, by rolling said molding material;
8. one or more sheets of previously used molding material are applied after polymerization of the preceding layers;
9. the complementary mold is coupled;
10. polymerization is performed at 60 °C;
11. the manufactured article is extracted once the polymerization reaction is complete (completion of the exothermic step).

### EXAMPLE 4

### Flat laminates

### METHOD ACCORDING TO THE INVENTION

The following sequence is used:
1. a layer of gelcoat is applied;
2. once the gelcoat has cured, a composite molding material, constituted by pre-impregnated material in the form of a lamina with a thickness of 1 to 4 mm and a grammage of 500 to 3500 g/m², is applied;
3. the molding material is compacted with the gelcoat, in order to optimize adhesion and eliminate air pockets, by rolling said molding material;
4. polymerization at ambient temperature under UV irradiation is performed for 0.5 to 25 minutes;
5. the article is extracted once the polymerization reaction is complete.

### EXAMPLE 5

Preparation of a composite (preimpregnated) molding material suitable for reinforcing substrates made of plastic, stone-like or metallic material.

A peroxide catalyst is added to an unsaturated polyester resin diluted in styrene. After accurate agitation, one or more thixotropic agents, such as pyrogenic silicas or bentonites, are added slowly under the continuous and controlled action of the agitator. The operation lasts for two hours at 25 °C until a uniform mixture is obtained.

The resulting mixture is then distributed uniformly on a polythene film in order to obtain a sheet of uniform thickness (1 to 5 mm).

Chopped glass fibers are then deposited uniformly on the sheet; the resulting composite is then covered with another polythene film and subsequently passed through two rollers which complete the impregnation of the glass fibers and determine the thickness of the final pre-impregnated material. The resulting sheet of composite molding material is then covered with a cellophane film in order to avoid evaporation of the cross-linking monomer of the vinyl aromatic or acrylic type.

### EXAMPLE 6

A composition of composite molding material in sheet form:

| | |
|---|---|
| Unsaturated styrened polyester resin | 53% (40% styrene) |
| inert mineral filler | 16% |
| glass reinforcing | 30% |
| peroxide catalyst | 1% |

The polyester resin used had the following technical characteristics:

| | |
|---|---|
| Acid no. | 28 mg KOH/g |
| styrene content | 42% |
| gel time at 90 °C | 5' |
| exothermic peak | 150 °C |
| UV curing | 1-30 min |

### EXAMPLE 7

| | |
|---|---|
| Vinyl ester resin | 53% (44% styrene) |
| inert mineral filler | 16% |
| glass reinforcing | 30% |
| UV catalyst | 1% |

The polyester resin used has the following technical characteristics:

| | |
|---|---|
| Acid no. | 12 mg KOH/g |
| styrene content | 44 |
| UV curing | 1-30 minutes |

The disclosures in Italian Patent Application No. MI2000A000829, from which this application claims priority, are incorporated herein by reference.

## Claims

1. A method for reinforcing manufactured articles made of thermoplastic, stone-like or metallic material, comprising:
the application of a film of composite molding material on a manufactured article made of thermoplastic, stone-like or metallic material;
the polymerization of said composite molding material so as to make said film adhere firmly to the manufactured article and provide a reinforced structure;
said method being **characterized in that** said composite molding material comprises a reinforcing fiber chosen among glass fiber, carbon fiber, Kevlar impregnated with a thermosetting resin chosen from the group that consists of unsaturated polyester resin, vinyl ester resin, epoxy resin, cyanate resin, and mixtures thereof.

2. The method according to claim 1, **characterized in that** said unsaturated polyester resin or vinyl ester resin are diluted in monomers which facilitate polymerization, chosen from the group that consists of vinyl aromatic monomers, acrylic monomers, methacrylic monomers and mixtures thereof.

3. The method according to claim 2, **characterized in that** said acrylic or methacrylic monomers have the formula M1, M2, M3, where
**M1** is RCH=CR'-CO-OR"
where R = H, CH₃, C₂H₅, C₃H₇, C₄H₉
R' = H, CH₃
R" = CH₃, C₂H₄OH, C₃H₆OH, (C₃H₆O)ₙ H
and n = 1,2,3,4,5,6,7,8;
**M2** is (RCH=CR'-CO-O)₂R"
where R = H, CH₃, C₂H₅, C₃H₇, C₄H₉
R' = H, CH₃
R" = CₙH₂ₙ
and n = 1,2,3,4,5,6,7,8;
**M3** is (CH₂=CR-CO-OCH₂)₃CC₂H₅
where R = H, CH₃.

4. The method according to claim 2, **characterized in that** said vinyl aromatic monomers are chosen from the group that consists of styrene, divinyl benzene, alpha methyl styrene, vinyl toluene and mixtures thereof.

5. The method according to one or more of the preceding claims, **characterized in that** the coupling step occurs in reduced-pressure conditions.

6. The method according to one or more of the preceding claims, **characterized in that** said polymerization is performed hot, at a temperature between 50 and 100 °C.

7. The method according to one or more of the preceding claims, **characterized in that** said polymerization occurs at ambient temperature by exposure to ultraviolet rays.

8. The method according to one or more of the preceding claims, **characterized in that** said unsaturated polyester resin or vinyl ester resin are diluted in styrene monomers in order to produce a semifluid resinous mixture in which said monomers are present in an amount between 20 and 55% by weight.

9. The method according to one or more of the preceding claims, **characterized in that** said composite molding material further comprises an inert mineral filler.

10. The method according to one or more of the preceding claims, **characterized in that** it comprises the application of an adhesion promoter to said manufactured article in a step which precedes the application of the film made of molding material.

11. The method according to one or more of the preceding claims, **characterized in that** said manufactured article is a molded product.

12. The method according to one or more of the preceding claims, **characterized in that** said manufactured article made of thermoplastic material is a preformed bathtub.

13. The method for reinforcing plastic, stone-like or metallic manufactured articles, comprising:
-- a preliminary step for forming a substrate;
-- the optional application of an adhesion promoter to said substrate;
-- the application of a sheet of a molding material on the surface optionally treated with adhesion promoter on the substrate;
-- the polymerization of said molding material in order to couple the reinforcing sheet made of molding material on said substrate;
-- the extraction of the reinforced substrate,
said method being **characterized in that** said molding material is a composite material which comprises a reinforcing fiber chosen among glass fiber, carbon fiber, Kevlar, impregnated in a resin chosen from the group that consists of unsaturated polyester resin, vinyl ester resin, epoxy resin, cyanate resin and mixtures thereof.

14. A reinforced manufactured article obtainable with the method according to any one of claims 1 to 13.

15. A composite material for molding on substrates made of plastic, stone-like or metallic material, **characterized in that** it comprises a reinforcing fiber chosen among glass fiber, carbon fiber, Kevlar impregnated in a resin chosen from the group that consists of unsaturated polyester resin, vinyl ester resin, epoxy resin, cyanate resin and mixtures thereof.

16. The composite material for molding on substrates according to claim 15, **characterized in that** said unsaturated polyester resin and vinyl ester resin are diluted in monomers which are suitable for polymerization, chosen among vinyl aromatic monomers, acrylic and methacrylic monomers, and mixtures thereof.

17. The composite material for molding on substrates according to claim 16, **characterized in that** said acrylic monomers have the formula M1, M2, M3, where
**M1** is RCH=CR'-CO-OR"
where R = H, CH₃, C₂H₅, C₃H₇, C₄H₉
R' = H, CH₃
R" = CH₃, C₂H₄OH, C₃H₆OH, (C₃H₆O)ₙ H
and n = 1,2,3,4,5,6,7,8;
**M2** is (RCH=CR'-CO-O)₂R"
where R = H, CH₃, C₂H₅, C₃H₇, C₄H₉
R' = H, CH₃
R" = CₙH₂ₙ
and n = 1, 2, 3, 4, 5, 6, 7, 8;
**M3** is (CH₂=CR-CO-OCH₂)₃CC₂H₅
where R = H, CH₃.

18. The composite material according to claim 16, **characterized in that** said vinyl aromatic monomers are chosen from the group that consists of styrene, divinyl benzene, alpha methyl styrene, vinyl toluene, and mixtures thereof.
